# EUROPÄISCHE PATENTSCHRIFT

(11) **EP 1 947 825 B1**
(45) Veröffentlichungstag und Bekanntmachung des Hinweises auf die Patenterteilung: **01.10.2014**
(21) Anmeldenummer: 08100779.1
(22) Anmeldetag: 22.01.2008
(51) Int. Cl.: H04W 8/08, H04W 4/22, H04W 76/00, H04L 29/06

(54) **Einrichtung und Verfahren zum Umschalten in Domänen**
Device and method for switching in domains
Dispositif et procédé destinés à la commutation en domaines

(30) Priorität: 22.01.2007 DE 102007004155
(43) Veröffentlichungstag der Anmeldung: 23.07.2008
(73) Patentinhaber: Vodafone Holding GmbH, 40213 Düsseldorf (DE)
(72) Erfinder: Lu, Yang, 40489 Düsseldorf (DE)
(74) Vertreter: Weisbrodt, Bernd

(56) Entgegenhaltungen:
- HUAWEI TECHNOLOGIES: "Roaming case for IMS emergency session" 3GPP DRAFT; S2-032034, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG2, Nr. San Diego, USA; 20030512, 7. Mai 2003 (2003-05-07), XP050244605
- 3GPP: "3rd Generation Partnership Project;Technical Specification Group Services and System Aspects;IP Multimedia Subsystem (IMS) emergency sessions;(Release 7)" 3GPP DRAFT; S2-052612 TS 23167-011_EMERGENY IMS RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG2, Nr. Yokosuka; 20051107, 18. Oktober 2005 (2005-10-18), XP050253977

## Beschreibung

### Technisches Gebiet

Die Erfindung betrifft eine Einrichtung zur Domänenumschaltung und/oder Weiterleitung von teilnehmerinitiierten IMS-Anrufen mit einem Mobilfunkendgerät in einem öffentlichen Mobilfunknetz, wobei IMS-Anrufe aus einem öffentlichen, besuchten Funknetz über das Heimatfunknetz eines anrufenden Mobilfunkteilnehmers während des Roaming weitergeleitet werden, das öffentliche, besuchte Funknetz und das Heimatfunknetz jeweils ein Kernnetz aufweisen, welche eine Mobilfunkvermittlungsstelle, sowie jeweils einen ersten Proxy-Sever und einen zweiten Proxy-Server aufweisen, das Mobilfunkendgerät gleichzeitig bei einer leitungsvermittelnden Domäne des besuchten Mobilfunknetzes und einer IMS-Domäne angemeldet ist, und am Mobilfunkendgerät eine Domänenumschaltvorrichtung vorgesehen ist, zum direkten Weiterleiten von teilnehmerinitiierten IMS-Anrufen innerhalb des öffentlichen, besuchten Funknetzes unter Umgehung des Heimatfunknetzes.

Ferner betrifft die Erfindung ein Verfahren zur Domänenumschaltung und/oder Weiterleitung von teilnehmerinitiierten Anrufen mit einem Mobilfunkendgerät in einem öffentlichen Mobilfunknetz, wobei IMS-Anrufe aus einem öffentlichen, besuchten Funknetz über das Heimatfunknetz eines anrufenden Mobilfunkteilnehmers während des Roaming weitergeleitet werden, das Mobilfunkendgerät gleichzeitig bei einer leitungsvermittelnden Domäne des besuchten Mobilfunknetzes und einer IMS-Domäne angemeldet ist, und die weiterzuleitenden IMS-Anrufe von teilnehmerinitiierten IMS-Anrufen innerhalb des besuchten Funknetz in eine leitungsvermittelnden Domäne umgeschaltet werden und unter Umgehung des Heimatfunknetzes direkt weitergeleitet werden.

### Stand der Technik

Mit der Einführung von digitalen Mobilfunknetzen der 2. Generation und entsprechenden Standards, wie beispielsweise GSM (= Global System for Mobile Communication) wurde weltweites, mobiles Telefonieren unkompliziert möglich. Ein Mobilfunkteilnehmer ist quasi an jedem Ort erreichbar oder kann selber Telefonate führen. Dabei wird die Nutzung eines Mobilfunkendgeräts in einem anderen, besuchten Mobilfunknetz (VPLMN= Visited Public Land Mobile Network) als dem Heimatmobilfunknetz (HPLMN= Home Public Land Mobile Network) mit Roaming (engl. Wandern) bezeichnet. Hierzu ist erforderlich, dass die Betreiber der beiden Netzwerke ein Roamingabkommen getroffen und notwendige Signalisierungs- und Datenverbindungen zwischen ihren Netzen geschaltet haben. Wesentlich beim Roaming ist ein Zugriff des VPLMN auf ein Teilnehmerregister (HLR= Home Location Register) des HPLMN des Mobilfunkteilnehmers. Nur so kann überprüft werden, ob ein roamender Mobilfunkteilnehmer nicht gesperrt ist. Durch ein Einbuchen im VPLMN erfährt das HPLMN den Standort des Mobilfunkteilnehmers und kann ankommende Gespräche in das VPLMN weitervermitteln.

Etwa gleichzeitig mit den Mobilfunknetzen der 2. Generation etablierte sich das Internet überaus erfolgreich als weltweites Computernetzwerk. Im Gegensatz zu den leitungsorientierten Mobilfunknetzen der 2. Generation nutzt das Internet paketorientierte Protokolle. Um das Internet mit seinem riesigen Informationsangebot und unzähligen Diensten auch mobil zur Verfügung zu stellen, unterstützen Mobilfunknetze der 2,5. und 3. Generation, beispielsweise nach dem GSM/GPRS- oder UMTS-Standard, sowohl leitungs- als auch paketorientierte Dienste.

Leitungsorientierte Dienste (CS= Circuit Switched) werden dadurch realisiert, dass jedes Übertragungssignal ein eigenes Übertragungsmedium - einen Kanal bzw. eine Leitung - zur Verfügung gestellt bekommt. Um eine Verbindungsleitung von einer Quelle bis zu einem Ziel aufzubauen, sind Vermittlungsstellen notwendig. Bei paketorientierten Diensten (PS= Packet Switched) werden zu übermittelnde Daten in Paketen zusammengefasst und mit einer Zieladresse und einem Absender versehen. Die Pakete werden über Übertragungskanäle und Router an einen Empfänger geschickt. Dabei werden im Unterschied zu CS-Diensten Pakete verschiedener Teilnehmer über den gleichen Übertragungskanal gesendet.

Der Aufbau eines Mobilfunknetzes der 3. Generation kann physikalisch in einzelne Bereiche oder Subsysteme aufgeteilt werden, welche im UMTS auch Domänen genannt werden. Im Wesentlichen werden drei große Teilbereiche unterschieden: Mobilfunkendgeräte (UE= User Equipment), ein funkbasiertes Zugangsnetz (RAN= Radio Access Network) und ein Vermittlungsnetz bzw. Kernnetz (CN= Core Network). Das Kernnetz wiederum enthält eine CS-Domäne zum Aufbau leitungsorientierter Verbindungen und eine PS-Domäne für paketorientierte Verbindungen. Beide Domänen werden über verschiedene Schnittstellen mit dem Zugangsnetz verbunden. Weiterhin enthält das Kernnetz ein IP Multimedia Subsystem (IMS-Domäne), um mobile und ortsgebundene Multimedia-Dienste anbieten zu können.

Die CS-Domäne enthält u.a. mindestens eine Vermittlungsstelle (MSC= Mobile Switching Center) zum internen Aufbau von leitungsorientierten Verbindungen und eine Gateway-MSC (GMSC). Die Gateway-MSC vermittelt Verbindungen zwischen dem Mobilfunknetz und externen Telekommunikationsnetzen. Die PS-Domäne verfügt über eine SGSN (= Serving GPRS Support Node) und einen GGSN (= Gateway GPRS Support Node). Die SGSN bildet eine Schnittstelle zwischen dem funkbasiertem Zugangsnetz und einem Festnetz für paketorientierte Dienste, während über die GGSN Verbindungen zu anderen IP-Netzen aufgebaut werden.

Über die PS-Domäne kann direkt auf die IP Multimedia Subsystem Domäne (IMS-Domäne) zugegriffen werden. Die IMS-Domäne ist eine nach 3GPP standardisierte Netzwerkarchitektur für Telekommunikationsnetzwerke. Als paketorientiertes System benutzt das IMS das IP und Voice-over-IP (VoIP). Ein Ziel des IMS ist es, alle Internetdienste auch für Mobilfunkteilnehmer zugänglich zu machen. Dazu können neue Dienste, beispielsweise mit einen Applikation-Server (AS), einfach und schnell in das IMS eingeführt und integriert werden. Leitungsorientierte Telefondienste werden über Gateways, wie ein Medien Gateway (MGW) für Daten oder ein Signalisierungsgateway (SGW) für leitungsvermittelnde Signale, unterstützt.

Als eine wesentliche Steuerungs- und Signalisierungskomponente enthält die IMS-Domäne eine Call Server Control Funktion (= CSCF). Gemäß der 3GPP-Rel-5-Spezifizierung wird in der CSCF das Session Initial Protokoll (= SIP) eingesetzt. Als SIP Server erfüllt die CSCF Aufgaben im Ruf- und Sitzungs-Management, einschließlich Authentifizierung, Autorisierung und Erzeugen von Verrechnungsinformationen. Es werden drei funktionell unterschiedliche CSCF eingesetzt: Serving-CSCF (= S-CSCF), Proxy-CSCF (= P-CSCF) und Interrogating-CSCF (= I-CSCF).

Die S-CSCF ist verantwortlich für eine Nutzerregistrierung, eine Verwaltung von Sitzungszuständen und eine Interaktion mit Dienstplattformen. Das P-CSCF stellt einen ersten Kontaktpunkt für Mobilfunkendgeräte in der IMS-Domäne dar. Sie leitet SIP-Nachrichten an die S-CSCF weiter und erfüllt Aufgaben für eine Autorisierung von Netzwerkressourcen für IMS-Sitzungen. Die I-CSCF ist eine optionale Komponente und dient zur Abgrenzung einzelner Netzwerke und einem Verbergen von Komponenten im jeweils dahinter liegenden Netz.

Mobilfunkteilnehmer befinden sich gelegentlich in fremden Mobilfunknetzen, den besuchten Funknetzen (VPLMN). Bei einem IMS-Anruf des Mobilfunkteilnehmers zu einem lokalen Server (z.B. Operator im Kunden Service) des besuchten Funknetzes wird die Anfrage über das Heimatfunknetz (HPLMN) geleitet. Dies führt zu relativ hohem Verwaltungsaufwand und verbraucht unnötig Ressourcen. Der Verbindungsaufbau wird zudem hierdurch verzögert. Es gibt jedoch Kommunikationsanfragen, wie ein IMS-Notruf innerhalb des besuchten Funknetzes, die sehr eilbedürftig sind. Diese IMS-Notrufe werden derzeit ebenfalls zunächst vom besuchten Funknetz zum Heimatfunknetz geleitet, um dann wieder zurück in das besuchte Funknetz übermittelt zu werden.

In "Roaming case for IMS emergency session ", Huawei Technologies, 3GPP Draft,S2-032034 wird ein Verfahren zum Umleiten von Notrufen eines Mobilfunkendgeräts beschrieben, welches beim so genannten "Roaming" in einem besuchten Mobilfunknetz angemeldet ist. Dabei kennzeichnet das Mobilfunkendgerät einen paketorientierten IMS-Notruf als solchen. Ein entsprechend ausgebildetes S-CSCF oder P-CSCF des besuchten Mobilfunknetzes erkennt den Notruf an der Kennung und leitet diesen ohne Interaktion mit dem Heimatnetz des Mobilfunkendgeräts an einen Notrufdienst des besuchten Mobilfunknetzes weiter. Falls das besuchte Mobilfunknetz einen paketorientierten Notruf nicht unterstützt, wird der Notruf an die IMS-Domäne des Heimatnetzes geleitet. Eine P-CSCF des Heimatnetzes sendet daraufhin eine Antwort an das Mobilfunkendgerät mit dem Hinweis, dass ein Notruf über die CS-Domäne des besuchten Mobilfunknetzes erfolgen soll.

Das Dokument 3GPP TS 23.167 V0.1.1; 3GPP: Technical Specification Group Services and System Aspects; IP Multimedia Subsystem (IMS) emergency sessions (Release 7) beschreibt ebenfalls IMS-basierte Notrufe in besuchten Mobilfunknetzen. Auch hier kann ein Mobilfunkendgerät einen solchen Notruf erkennen und entsprechend kennzeichnen. Eine P-CSCF des besuchten Mobilfunknetzes erkennt den Notruf und leitet ihn an eine E-CSCF (Emergency-CSCF) weiter. Wird diese Vorgehensweise im besuchten Mobilfunknetz nicht unterstützt, sendet eine P-CSCF des Heimatnetzes nach Empfang des Notrufs einen Hinweis zur Nutzung der CS-Domäne des besuchten Mobilfunknetzes für den Notruf.

### Offenbarung der Erfindung

Aufgabe der Erfindung ist es daher, die Nachteile des Standes der Technik zu vermeiden und eine Einrichtung oder ein Verfahren zur Domänenumschaltung und/oder

Weiterleitung eines IMS-Anrufs zu schaffen, um möglichst einfach und schnell eine Verbindung zu bestimmten Adressen und/oder Rufnummern eines Servers herzustellen.

Erfindungsgemäß wird die Aufgabe dadurch gelöst, dass bei einer Vorrichtung der eingangs genannten Art die Domänenumschaltvorrichtung des Mobilfunkendgeräts dazu ausgebildet ist, einen Verbindungsaufbau des IMS-Anrufs über die leitungsbasierte Domäne des besuchten Mobilfunknetzes statt der IMS-Domäne auszuführen.

Weiterhin wird die Aufgabe durch ein Verfahren der eingangs genannten Art dadurch gelöst, dass ein Verbindungsaufbau des IMS-Anrufs durch eine Domänenumschaltvorrichtung (82) des Mobilfunkendgeräts (60) über die leitungsbasierte Domäne des besuchten Mobilfunknetzes (40) statt der IMS-Domäne ausgeführt wird.

Die Erfindung beruht auf dem Prinzip, das in einem Mobilfunkendgerät eine Vorrichtung zur Domänenumschaltung vorgesehen ist. Mit dieser Domänenumschaltung und dem entsprechenden erfindungsgemäßen Verfahren werden nicht alle teilnehmerinitiierte IMS-Anrufe beim Roaming in fremden Mobilfunknetzen an eine IMS-Domäne des Heimat-Mobilfunknetzes weitergeleitet, wie es in 3GPP TS 23.228 spezifiziert wird. Stattdessen werden IMS-Anrufe, beispielsweise an einen über die IMS-Domäne des besuchten Mobilfunknetzes erreichbaren Applikations-Server, direkt und ohne Umweg über das Heimat-Mobilfunknetz über eine leitungsbasierte Domäne des besuchten Mobilfunknetzes weitergeleitet.

Durch die direkte Weiterleitung unter Umgehung des Heimat-Mobilfunknetzes wird beispielsweise eine Sitzung mit einem Applikations-Server wesentlich schneller aufgebaut. Dies ist insbesondere bei Notrufen über eine IMS-Domäne vorteilhaft, denn hierbei ist ein möglichst schneller Verbindungsaufbau wichtig. Mit einer Vermeidung eines Verbindungsaufbaus über das Heimat-Mobilfunknetz sind zudem weniger Komponenten und nur ein Mobilfunknetz an der Verbindung beteiligt. Daher wird ein Verbindungsaufbau einfacher und zuverlässiger durchgeführt. Außerdem wird eine unnötige Nutzung bzw. Belastung von Netzwerkressourcen, insbesondere im Heimat-Mobilfunknetz vermieden.

Ein weiterer bedeutender Vorteil der erfindungsgemäßen Einrichtung und des Verfahrens zur Domänenumschaltung und/oder Weiterleitung von teilnehmerinitiierten IMS-Anrufen besteht darin, dass nur das Mobilfunkendgerät modifiziert wird. Dadurch sind keine arbeitsaufwendigen und kostspieligen Änderungen an einem Mobilfunknetz notwendig. Solche Änderungen müssen vor ihrem Einsatz umfangreich und zeitaufwendig auf ihre Kompatibilität mit allen anderen Netzwerkkomponenten geprüft werden. Wird dabei ein Umstand übersehen, kann es zu einer negativen Beeinträchtigung des Mobilfunknetzes kommen. Diese Nachteile werden mit der erfindungsgemäßen Einrichtung und dem Verfahren vermieden.

Gemäß einer vorteilhafte Ausgestaltung der erfindungsgemäßen Einrichtung zur Domänenumschaltung und/oder Weiterleitung von teilnehmerinitüerten IMS-Anrufen sind Mittel zur Erkennung der Zieladresse und/oder -rufnummer des angerufenen Servers vorgesehen. Mit den Mittel werden automatisch Zieladressen oder Rufnummern angerufener Server ermittelt. Erst mit dieser Kenntnis kann eine Domänenumschaltung oder Weiterleitung zweckmäßig vorgenommen oder unterlassen werden. Ein Mobilfunkteilnehmer muss dabei nicht mehr wissen, ob ein IMS-Dienst lokal im besuchten Mobilfunknetz zur Verfügung steht und ob sich eine Weiterleitung lohnt. Durch die Mittel zur Erkennung der Zieladressen oder -rufnummern wird somit eine Domänenumschaltung für einen Mobilfunkteilnehmer bedeutend erleichtert.

In einer weiteren bevorzugten Ausbildung der Erfindung sind Filtermittel, welche IMS-Anrufe zu bestimmten Zieladressen und/oder -rufnummern zur Domänenumschaltung und zur direkten Weiterleitung herausfiltern, enthalten. Mit den Filtermittel werden alle Zieladressen mit bestimmten Merkmalen erkannt und jeweils eine Domänenumschaltung und Weiterleitung vorgenommen oder unterlassen. Die Filtermittel ermöglichen somit ein Erkennen von Zieladressen oder Rufnummern, bei denen eine Weiterleitung oder Domänenumschaltung zweckmäßig ist. Beispielweise können die Filtermittel alle Zieladressen mit einer, dem Land des besuchten Mobilfunknetzes entsprechenden Länderkennung erkennen und daraufhin eine automatische Weiterleitung veranlassen. Eine automatische Domänenumschaltung oder Weiterleitung wird nunmehr zuverlässig durchführbar. Damit wird erreicht, dass ein Mobilfunkteilnehmer eine Domänenumschaltung oder Weiterleitung nicht umständlich und fehlerträchtig manuell vornehmen muss.

Bei einer effektiven Ausbildung der Erfindung sind Mittel zum direkten Weiterleiten in eine paketvermittelnde Domäne vorgesehen. Mit diesen Mitteln wird eine direkte Weiterleitung von teilnehmerinitiierten IMS-Anrufen in eine paketvermittelnde Domäne des besuchten Mobilfunknetzes durchführbar. Ein Verbindungsaufbau muss nicht mehr über das Heimat-Mobilfunknetz durchgeführt werden. Der Verbindungsaufbau erfolgt daher ohne Umweg über das Heimat-Mobilfunknetz schneller und ressourcenschonender.

Eine weitere bevorzugte Ausgestaltung der Erfindung wird durch Mittel zur Domänenumschaltung und zum direkten Weiterleiten in einer leitungsvermittelnden Domäne innerhalb eines besuchten Funknetzes erreicht. Ein teilnehmerinitiierter IMS-Anruf wird durch die Mittel im Mobilfunkendgerät nicht mehr über eine IMS-Domäne des Heimat-Mobilfunknetzes aufgebaut. Vielmehr erfolgt durch die Domänenumschaltung am Mobilfunkendgerät ein Verbindungsaufbau über eine CS-Domäne. Der IMS-Anruf wird somit direkt auf eine CS-Domäne des besuchten Mobilfunknetzes weitergeleitet. Durch eine Weiterleitung von teilnehmerinitüerten IMS-Anrufen auf eine CS-Domäne des besuchten Mobilfunknetzes wird ein umständlicher Verbindungsaufbau über das Heimat-Mobilfunknetz vermieden. Mit der Vermeidung des Umwegs über das Heimat-Mobilfunknetz wird ein Verbindungsaufbau zügiger, zuverlässiger und weniger aufwendig durchführbar.

Bei einer vorteilhaften Ausgestaltung des erfindungsgemäßen Verfahrens zur Domänenumschaltung und/oder Weiterleitung von teilnehmerinitiierten Anrufen wird die Adresse und/oder Rufnummer des angerufenen Servers ermittelt. Mit den ermittelten Adressen wird eine Entscheidung zur Durchführung oder Unterlassung einer Domänenumschaltung oder Weiterleitung wesentlich erleichtert. Ein Mobilfunkteilnehmer muss nicht mehr wissen, ob ein IMS-Dienst lokal im besuchten Mobilfunknetz zur Verfügung steht und sich eine Weiterleitung lohnt. Dadurch wird der Einsatz einer Domänenumschaltung und/oder Weiterleitung für einen Mobilfunkteilnehmer vereinfacht.

Eine weitere bevorzugte Variante des erfindungsgemäßen Verfahrens wird dadurch erzielt, dass IMS-Anrufe zu bestimmten Zieladressen und/oder -rufnummern zur Domänenumschaltung und zur direkten Weiterleitung herausgefiltert werden. Hierbei werden alle Zieladressen mit bestimmten Merkmalen herausgefiltert und jeweils eine Domänenumschaltung und Weiterleitung vorgenommen oder unterlassen. Eine Weiterleitung und Domänenumschaltung wird automatisch nur dann durchgeführt, wenn sie zweckmäßig ist. Eine automatische Domänenumschaltung und Weiterleitung wird effizient und zuverlässig ermöglicht. Eine komplizierte und fehlerträchtige manuelle vom Mobilfunkteilnehmer vorgenommene Domänenumschaltung und Weiterleitung wird vermieden.

In einer effektiven Ausbildung des erfindungsgemäßen Verfahrens zur Domänenumschaltung und/oder Weiterleitung von teilnehmerinitiierten IMS-Anrufen wird ein IMS-Anruf innerhalb einer paketvermittelnden Domäne direkt weitergeleitet. Ein teilnehmerinitiierte IMS-Verbindungsaufbau muss nicht mehr über das Heimat-Mobilfunknetz erfolgen. Der Verbindungsaufbau wird so ohne Umweg über das Heimat-Mobilfunknetz zügiger durchgeführt. Weiterhin werden Netzwerkressourcen weniger belastet.

Gemäß einer vorteilhaften Ausgestaltung des erfindungsgemäßen Verfahrens wird ein IMS-Anruf in eine leitungsvermittelnden Domäne umgeschaltet und direkt innerhalb des besuchten Funknetzes weitergeleitet. Ein Verbindungsaufbau eines teilnehmerinitiierten IMS-Anrufs wird nicht mehr über eine IMS-Domäne des Heimat-Mobilfunknetzes durchgeführt. Stattdessen wird durch die Domänenumschaltung am Mobilfunkendgerät eine Verbindung über eine CS-Domäne eingerichtet. Der IMS-Anruf wird somit direkt auf eine CS-Domäne des besuchten Mobilfunknetzes weitergeleitet. Wiederum wird ein langwieriger und aufwendiger Verbindungsaufbau über das Heimat-Mobilfunknetz vermieden.

Weitere Ausgestaltungen und Vorteile ergeben sich aus dem Gegenstand der Unteransprüche, sowie der Zeichnung mit der dazugehörigen Beschreibung.

### Kurze Beschreibung der Zeichnung

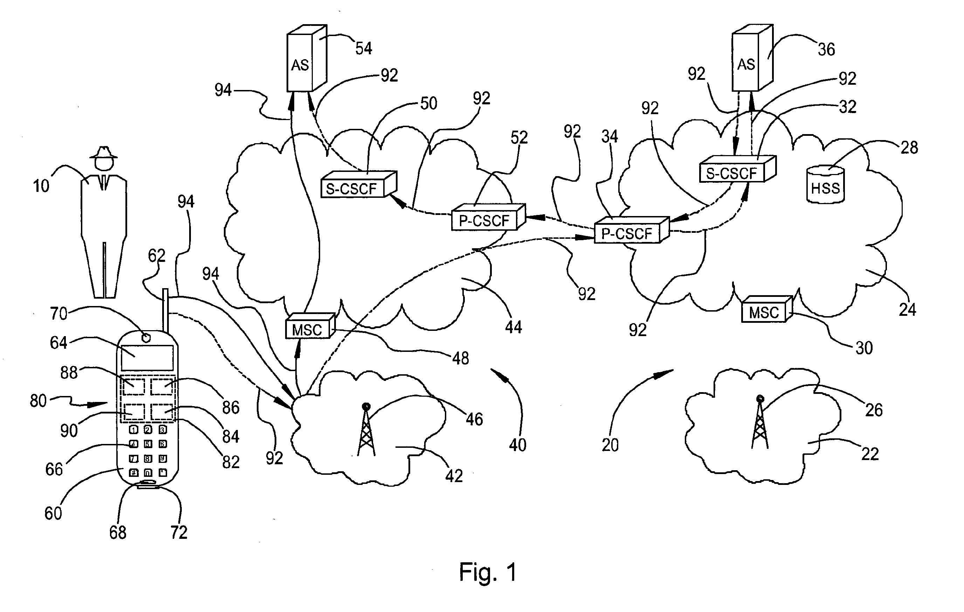

- Fig. 1: zeigt in einer schematischen Prinzipskizze ein Ausführungsbeispiel einer Einrichtung zur Domänenumschaltung und/oder Weiterleitung und einen Verbindungsaufbau mit bzw. ohne Domänenumschaltung und Weiterleitung.

### Bevorzugtes Ausführungsbeispiel

In Fig. 1 wird mit 10 ein Mobilfunkteilnehmer bezeichnet, welcher in einem Heimat-Mobilfunknetz (HPLMN) 20 registriert ist. Das Heimat-Mobilfunknetz 20 entspricht beispielsweise dem UMTS-Standard und enthält ein funkbasiertes Zugangsnetz 22 und ein Kernnetz 24. Mobilfunknetze der 3. Generation sind dem Fachmann z.B. aus der Internetseite http://www.3GPP.org (Spezifikationen für UMTS-Mobilfunknetze) bekannt. Der Einfachheit halber werden daher das Kernnetz 24 nur durch eine Wolke und das funkbasierte Zugangsnetz 22 nur durch eine Wolke mit einem darin enthaltenen Antennenmast 26 stilisiert dargestellt.

Das Kernnetz 24 verfügt über ein Heimat-Teilnehmer-Server (HSS= Home Subscriber Server) 28 zur Benutzer-Identifikation, Zugangs-Autorisierung und Verwaltung von Kundenprofilen. Der Mobilfunkteilnehmer 10 ist in dem HSS 28 registriert. Weiterhin enthält das Kernnetz 24 eine Mobilfunkvermittlungsstelle 30 für leitungsorientierte Dienste in einer hier nicht dargestellten CS-Domäne, sowie eine Service Call Server Control Function (S-CSCF) 32 und eine Proxy Call Server Control Funktion (P-CSCF) 34 in einer ebenfalls nicht dargestellten IMS-Domäne. Über die P-CSCF 34 und die S-CSCF 32 werden einem Mobilfunkteilnehmer 10 IMS-Dienste von einem Applikations-Server 36 angeboten. Diese umfassen beispielsweise Telefon-, Echtzeit- und Multimedia-Dienste. Dabei übernimmt die S-CSCF 32 insbesondere die Verwaltung von IMS-Sitzungen und die Interaktion mit dem Applikations-Server 36, während die P-CSCF 34 einen ersten Kontaktpunkt für Endgeräte darstellt.

Der Mobilfunkteilnehmer 10 befindet sich im Bereich eines besuchten Mobilfunknetzes (VPLMN) 40. Auch das besuchte Mobilfunknetz 40 entspricht beispielsweise dem UMTS-Standard und enthält ein funkbasiertes Zugangsnetz 42 und ein Kernnetz 44. Diese sind wiederum der Einfachheit halber durch eine Wolke mit einem Antennenmast 46 bzw. eine Wolke stilisiert dargestellt. Das Kernnetz 44 verfügt ebenfalls über eine Mobilfunkvermittlungsstelle 48 in einer CS-Domäne für leitungsorientierte Vermittlungen. Weiterhin verfügt das Kernnetz 44 über eine S-CSCF 50 und eine P-CSCF 52 in einer IMS-Domäne, um IMS-Dienste von einem Applikations-Server 54 für einen Mobilfunkteilnehmer 10 zur Verfügung zu stellen. Die CS-Domäne und die IMS-Domäne sind zur Vereinfachung ebenso wie eine im Kernnetz 44 enthaltene PS-Domäne in Fig. 1 nicht dargestellt.

Der Mobilfunkteilnehmer 10 verfügt über ein Mobilfunkendgerät 60, um mobil über Mobilfunknetze 20, 40 zu kommunizieren und angebotene Dienste in Anspruch zu nehmen. Insbesondere unterstützt das Mobilfunkendgerät 60 Verbindungen zu einer CS-Domäne und zu einer IMS-Domäne eines Mobilfunknetzes (20, 40). Dazu beinhaltet das Mobilfunkendgerät 60 ein entsprechendes Mobilfunkmodul 62 zum Senden und Empfangen von Daten über ein Mobilfunknetz 20, 40. Ferner weist das Mobilfunkendgerät 60 eine Anzeige 64 zur Darstellung von Nummern, Adressen oder Bedienermenüs auf. Mit der Anzeige 64 ist beispielsweise auch eine Darstellung von Bild-, Video- oder Multimedia-Daten, sowie von Webseiten möglich. Eine Steuerung des Mobilfunkendgeräts 60 erfolgt durch den Mobilfunkteilnehmer 10 über eine Bedienungseinheit 66. Eine verbale Kommunikation wird dem Mobilfunkteilnehmer 10 durch ein Mikrofon 68 und ein Lautsprecher 70 ermöglicht, welche beispielsweise in dem Mobilfunkendgerät 60 enthalten sind oder mittels einer Schnittstelle 72 mit dem Mobilfunkendgerät 60 verbunden werden.

Weiterhin ist eine Einrichtung 80 zur Domänenumschaltung und Weiterleitung von teilnehmerinitiierten IMS-Anrufen vorgesehen. Dazu enthält das Mobilfunkendgerät 60 eine Domänenumschaltvorrichtung 82 und Erkennungsmittel 84 zum Ermitteln einer Zieladresse und/oder -rufnummer eines angerufenen Servers. Mit im Mobilfunkendgerät 60 enthaltenen Filtermittel 86 werden IMS-Anrufe mit bestimmten Zieladressen und/oder -rufnummern oder anderen Merkmalen herausgefiltert, um bei diesen eine Domänenumschaltung bzw. Weiterleitung vorzunehmen. Ferner verfügt das Mobilfunkendgerät 60 über Weiterleitungsmittel 88 zum direkten Weiterleiten von IMS-Anrufen in eine paketvermittelnde Domäne des besuchten Mobilfunknetzes 40. Mit in dem Mobilfunkendgerät 60 enthaltene Domänenumschalt- und Weiterleitungsmittel 90 werden andererseits IMS-Anrufe direkt in eine leitungsvermittelnde Domäne des besuchten Mobilfunknetzes 40 weitergeleitet.

Mittels Roaming wird dem Mobilfunkteilnehmer 10 eine Nutzung des Mobilfunkendgeräts 60 im besuchten Mobilfunknetz 40 ermöglicht. Dazu hat das Kernnetz 44 des besuchten Mobilfunknetzes 40 zur Teilnehmer-Identifikation und Zugangs-Autorisierung Zugriff auf den Heimat-Teilnehmer-Server 28 des Heimat-Mobilfunknetzes 20. Das Mobilfunkendgerät 60 meldet sich gleichzeitig bei der leitungsvermittelnden Domäne des besuchten Mobilfunknetzes 40 und der IMS-Domäne an und gestattet dem Mobilfunkteilnehmer 10 sowohl eine Nutzung von leitungsorientierte Diensten als auch von IMS Diensten.

Initiiert der Mobilfunkteilnehmer 10 nun einen IMS-Anruf mit seinem Mobilfunkendgerät 60 ohne eine Domänenumschaltung und Weiterleitung, so erfolgt ein Verbindungsaufbau gemäß der 3GPP Spezifikation (3GPP TS 23.228) entlang der gestrichelten Pfeile 92. Der IMS-Anruf wird mit Hilfe des Mobilfunkmoduls 62 zum funkbasierten Zugangsnetz 42 des VPLMN 40 übertragen. Von dort wird der IMS-Anruf über das Kernnetz 44 des VPLMN 40 an eine P-CSCF 34 im Kernnetz 24 des HPLMN 20 weitergeleitet. Der IMS-Anruf wird dann von der P-CSCF 34 über die zuständige S-CSCF 32 an den entsprechenden Applikations-Server 36 übermittel. Der Applikations-Server 36 ermittelt als angerufenen Server den Applikations-Server 54 im VPLMN 40 und leitet den IMS-Anruf wiederum über die S-CSCF 32 und die P-CSCF 34 an eine P-CSCF 52 im Kernnetz 44 des VPLMN 40. Von hier erreicht der IMS-Anruf über das S-CSCF 50 den angerufenen Applikations-Server 54. Dieser umständliche und schleifenartige Verbindungsaufbau dauert lange und ist nicht so zuverlässig wie ein direkter Verbindungsaufbau.

Mit einer Domänenumschaltung und Weiterleitung erfolgt ein Verbindungsaufbau eines teilnehmerinitiierten IMS-Anrufs entsprechend den kompakten Pfeilen 94. Veranlasst der Mobilfunkteilnehmer 10 einen IMS-Anruf mit dem Mobilfunkendgerät 60, so ermitteln zunächst die Erkennungsmittel 84 die Zieladresse oder Zielrufnummer des angerufenen Applikations-Servers 54. Die Filtermittel 86 erkennen anhand der Zieladresse oder Zielrufnummer, dass sich der Applikations-Server im Zuständigkeitsbereich des VPLMN 40 befindet und veranlassen eine automatische Domänenumschaltung.

Mit Hilfe der Domänenumschaltvorrichtung 82 wird dabei ein Verbindungsaufbau des IMS-Anrufs von dem Mobilfunkendgerät 60 nicht über eine entsprechende IMS-Domäne sondern über eine CS-Domäne des VPLMN 40 ausgeführt. Das Mobilfunkendgerät 60 leitet mit Hilfe der Weiterleitungsmittel 90 den IMS-Anruf über das funkbasierte Zugangsnetz 42 des VPLMN 40 an die Mobilfunkvermittlungsstelle 48 des Kernnetzes 44 weiter. Von der Mobilfunkvermittlungsstelle 48 wird der IMS-Anruf innerhalb des Kernnetzes 44 an den angerufenen Applikations-Server 54 übermittelt. Alternativ ist auch eine direkte Weiterleitung des IMS-Anrufs an eine paketorientierte Domäne mit den Weiterleitungsmitteln 88 möglich.

Entsprechendes gilt für das Verfahren. Veranlasst der Mobilfunkteilnehmer 10 einen IMS-Anruf mit dem Mobilfunkgerät 60, wird zunächst die Zieladresse oder -rufnummer ermittelt. Stellt sich bei einer anschließenden Filterung heraus, dass der angerufene Applikations-Server 54 an das VPLMN 40 angebunden ist und eine Domänenumschaltung und Weiterleitung zweckmäßig ist, so wird das automatisch veranlasst. Dabei findet die Weiterleitung entweder direkt in eine leitungsvermittelnde oder in eine paketvermittelnde Domäne des VPLMN 40 statt.

Durch die Einrichtung zur Domänenumschaltung und Weiterleitung 80 im Mobilfunkendgerät 60 oder das entsprechende Verfahren wird bei einem teilnehmerinitüerten IMS-Anruf in einem besuchten Mobilfunknetz 40 ein direkter und damit schneller Verbindungsaufbau zu einem angerufenen Applikations-Server 54 erzielt. Der Verbindungsaufbau erfolgt durch einen kürzeren Pfad zuverlässiger und belastet weniger Mobilfunknetzkomponenten.

### Bezugszeichenliste

- 10: Mobilfunkteilnehmer
- 20: Heimat-Mobilfunknetz
- 22: funkbasiertes Zugangsnetz
- 24: Kernnetz
- 26: Antennenmast
- 28: Heimat-Teilnehmer-Server
- 30: Mobilfunkvermittlungsstelle
- 32: Service Call Server Control Function
- 34: Proxy Call Server Control Function
- 36: Applikations-Server
- 40: besuchtes Mobilfunknetz
- 42: funkbasiertes Zugangsnetz im VPLMN
- 44: Kernnetz im VPLMN
- 46: Antennenmast im VPLMN
- 48: Mobilfunkvermittlungsstelle im VPLMN
- 50: Service Call Server Control Function im VPLMN
- 52: Proxy Call Server Control Function im VPLMN
- 54: Applikations-Server im VPLMN
- 60: Mobilfunkendgerät
- 62: Mobilfunkmodul
- 64: Anzeige
- 66: Bedienungseinheit
- 68: Mikrofon
- 70: Lautsprecher
- 72: Schnittstelle
- 80: Einrichtung zur Domänenumschaltung und Weiterleitung
- 82: Domänenumschaltvorrichtung
- 84: Erkennungsmittel
- 86: Filtermittel
- 88: Weiterleitungsmittel zu einer PS-Domäne
- 90: Domänenumschalt- und Weiterleitungsmittel zu einer CS-Domäne
- 92: Verbindungsaufbau ohne Domänenumschaltung und Weiterleitung
- 94: Verbindungsaufbau mit Domänenumschaltung und Weiterleitung

## Patentansprüche

1. Einrichtung (80) zur Domänenumschaltung und/oder Weiterleitung von teilnehmerinitiierten IMS-Anrufen mit einem Mobilfunkendgerät (60) in einem öffentlichen Mobilfunknetz (20, 40), wobei IMS-Anrufe aus einem öffentlichen, besuchten Funknetz (40) über das Heimatfunknetz (20) eines anrufenden Mobilfunkteilnehmers (10) während des Roaming weitergeleitet werden, das öffentliche, besuchte Funknetz (40) und das Heimatfunknetz (20) jeweils ein Kernnetz (24, 44) aufweisen, welche eine Mobilfunkvermittlungsstelle (30, 48), sowie jeweils einen ersten Proxy-Server (32, 50) und einen zweiten Proxy-Server (34, 52) aufweisen, *das Mobilfunkendgerät (60) gleichzeitig bei einer leitungsvermittelnden Domäne des besuchten Mobilfunknetzes (40) und einer IMS-Domäne angemeldet ist, und* am Mobilfunkendgerät (60) eine Domänenumschaltvorrichtung (82) vorgesehen ist, zum direkten Weiterleiten von teilnehmerinitiierten IMS-Anrufen innerhalb des öffentlichen, besuchten Funknetzes (40) unter Umgehung des Heimatfunknetzes (20), ***dadurch gekennzeichnet, dass** die Domänenumschaltvorrichtung (82) des Mobilfunkendgeräts (60) dazu ausgebildet ist, einen Verbindungsaufbau des IMS-Anrufs über die leitungsbasierte Domäne des besuchten Mobilfunknetzes (40) statt der IMS-Domäne auszuführen.*

2. Einrichtung (80) zur Domänenumschaltung und/oder Weiterleitung von teilnehmerinitiierten Anrufen mit einem Mobilfunkendgerät (60) in einem öffentlichen Mobilfunknetz (20, 40) nach Anspruch 1, **dadurch gekennzeichnet, dass** Mittel (84) zur Erkennung der Zieladresse und/oder -rufnummer des angerufenen Servers (54) vorgesehen sind.

3. Einrichtung (80) zur Domänenumschaltung und/oder Weiterleitung von teilnehmerinitiierten Anrufen mit einem Mobilfunkendgerät (60) in einem öffentlichen Mobilfunknetz (20, 40) nach Anspruch 2, **gekennzeichnet durch** Filtermittel (86), welche IMS-Anrufe zu bestimmten Zieladressen und/oder -rufnummern zur Domänenumschaltung oder zur direkten Weiterleitung herausfiltern.

4. Einrichtung (80) zur Domänenumschaltung und/oder Weiterleitung von teilnehmerinitiierten IMS-Anrufen mit einem Mobilfunkendgerät (60) in einem öffentlichen Mobilfunknetz (20, 40) nach einem der Ansprüche 1 bis 3, **gekennzeichnet durch** Mittel (88) zum direkten Weiterleiten in einer paketvermittelnden Domäne.

5. Einrichtung (80) zur Domänenumschaltung und/oder Weiterleitung von teilnehmerinitiierten IMS-Anrufen mit einem Mobilfunkendgerät (60) in einem öffentlichen Mobilfunknetz (20, 40) nach einem der Ansprüche 1 bis 4, **gekennzeichnet durch** Mittel (90) zur Domänenumschaltung und zum direkten Weiterleiten in einer leitungsvermittelnden Domäne innerhalb eines besuchten Funknetzes (40).

6. Verfahren zur Domänenumschaltung und/oder Weiterleitung von teilnehmerinitiierten IMS-Anrufen mit einem Mobilfunkendgerät (60) in einem öffentlichen Mobilfunknetz (20, 40), wobei IMS-Anrufe aus einem öffentlichen, besuchten Funknetz (40) über das Heimatfunknetz (20) eines anrufenden Mobilfunkteilnehmers (10) während des Roaming weitergeleitet werden, das Mobilfunkendgerät (60) gleichzeitig bei einer leitungsvermittelnden Domäne des besuchten Mobilfunknetzes (40) und einer IMS-Domäne angemeldet ist, und die weiterzuleitenden IMS-Anrufe von teilnehmerinitiierten IMS-Anrufen innerhalb des besuchten Funknetz (40) in eine leitungsvermittelnden Domäne umgeschaltet werden und unter Umgehung des Heimatfunknetzes (20) direkt weitergeleitet werden, **dadurch gekennzeichnet, dass** ein Verbindungsaufbau des IMS-Anrufs durch eine Domänenumschaltvorrichtung (82) des Mobilfunkendgeräts (60) über die leitungsbasierte Domäne des besuchten Mobilfunknetzes (40) statt der IMS-Domäne ausgeführt wird.

7. Verfahren zur Domänenumschaltung und/oder Weiterleitung von teilnehmerinitiierten Anrufen mit einem Mobilfunkendgerät (60) in einem öffentlichen Mobilfunknetz (20, 40) nach Anspruch 6, **dadurch gekennzeichnet, dass** die Adresse und/oder Rufnummer des angerufenen Servers (54) ermittelt wird.

8. Verfahren zur Domänenumschaltung und/oder Weiterleitung von teilnehmerinitiierten Anrufen mit einem Mobilfunkendgerät (60) in einem öffentlichen Mobilfunknetz (20, 40) nach Anspruch 7, **dadurch gekennzeichnet, dass** IMS-Anrufe zu bestimmten Zieladressen und/oder -rufnummern zur Domänenumschaltung oder zur direkten Weiterleitung herausgefiltert werden.

9. Verfahren zur Domänenumschaltung und/oder Weiterleitung von teilnehmerinitiierten IMS-Anrufen mit einem Mobilfunkendgerät (60) in einem öffentlichen Mobilfunknetz (20, 40) nach einem der Ansprüche 6 bis 8, **dadurch gekennzeichnet, dass** ein IMS-Anruf innerhalb einer paketvermittelnden Domäne direkt weitergeleitet wird.

10. Verfahren zur Domänenumschaltung und/oder Weiterleitung von teilnehmerinitiierten IMS-Anrufen mit einem Mobilfunkendgerät (60) in einem öffentlichen Mobilfunknetz (20, 40) nach einem der Ansprüche 6 bis 9, **dadurch gekennzeichnet, dass** ein IMS-Anruf in einer leitungsvermittelnden Domäne umgeschaltet und direkt innerhalb des besuchten Funknetzes (40) weitergeleitet wird.

## Claims

1. A device (80) for switching in domains and/or forwarding subscriber initiated IMS calls by means of a mobile terminal (60) in a public mobile radio network (20, 40), wherein IMS calls from a visited public radio network (40) are forwarded via the home radio network (20) of a calling mobile phone subscriber (10) while roaming, wherein the visited public radio network (40) and the home radio network (20) each comprise a core network (24, 44) which comprise a mobile switching center (30, 48) as well as respectively a first proxy server (32, 50) and a second proxy server (34, 52), wherein the mobile terminal (60) is simultaneously registered in a circuit-switching domain of the visited mobile radio network (40) and an IMS domain and wherein a device for switching in domains (82) is provided in the mobile terminal (60) for directly forwarding subscriber initiated IMS calls within the visited public radio network (40) while circumventing the home radio network (20), **characterized in that** the device for switching in domains (82) of the mobile terminal (60) is configured to establish a connection of the IMS call via the circuit based domain of the visited mobile radio network (40) instead of the IMS domain.

2. A device (80) for switching in domains and/or forwarding subscriber initiated calls by means of a mobile terminal (60) in a public mobile radio network (20, 40) according to claim 1, **characterized in that** means (84) for recognizing the target address and/or call number of the called server (54) are provided.

3. A device (80) for switching in domains and/or forwarding subscriber initiated calls by means of a mobile terminal (60) in a public mobile radio network (20, 40) according to claim 2, **characterized by** filter means (86) which filter out IMS calls made to specific target addresses and/or call numbers for being switched in domains or for being directly forwarded.

4. A device (80) for switching in domains and/or forwarding subscriber initiated IMS calls by means of a mobile terminal (60) in a public mobile radio network (20, 40) according to one of the claims 1 through 3, **characterized by** means (88) for the direct forwarding in a packet switching domain.

5. A device (80) for switching in domains and/or forwarding subscriber initiated IMS calls by means of a mobile terminal (60) in a public mobile radio network (20, 40) according to one of the claims 1 through 4, **characterized by** means (90) for switching in domains and the direct forwarding in a circuit-switching domain within a visited radio network (40).

6. A method for switching in domains and/or forwarding subscriber initiated IMS calls by means of a mobile terminal (60) in a public mobile radio network (20, 40), wherein IMS calls from a visited public radio network (40) are forwarded via the home radio network (20) of a calling mobile phone subscriber (10) while roaming, wherein the mobile terminal (60) is simultaneously registered in a circuit-switching domain of the visited mobile radio network (40) and an IMS domain and wherein the IMS calls to be forwarded out of subscriber initiated IMS calls are switched into a circuit-switching domain within the visited radio network and directly forwarded while circumventing the home radio network (20), **characterized in that** a connection of the IMS call is established by a device for switching in domains (82) of the mobile terminal (60) via the circuit based domain of the visited mobile radio network (40) instead of the IMS domain.

7. A method for switching in domains and/or forwarding subscriber initiated calls by means of a mobile terminal (60) in a public mobile radio network (20, 40) according to claim 6, **characterized in that** the address and/or call number of the called server (54) will be determined.

8. A method for switching in domains and/or forwarding subscriber initiated calls by means of a mobile terminal (60) in a public mobile radio network (20, 40) according to claim 7, **characterized in that** IMS calls made to specific target addresses and/or call numbers are filtered out for being switched in domains or for being directly forwarded.

9. A method for switching in domains and/or forwarding subscriber initiated IMS calls by means of a mobile terminal (60) in a public mobile radio network (20, 40) according to one of the claims 6 through 8, **characterized in that** an IMS call is directly forwarded within a packet-switching domain.

10. A method for switching in domains and/or forwarding subscriber initiated IMS calls by means of a mobile terminal (60) in a public mobile radio network (20, 40) according to one of the claims 6 through 9, **characterized in that** an IMS call is switched in a circuit-switching domain and directly forwarded within the visited radio network (40).

## Revendications

1. Dispositif (80) destiné à la commutation en domaines et/ou au transfert d'appels IMS initiés par des abonnés par moyen d'un terminal mobile (60) dans un réseau radio mobile public (20, 40), les appels IMS à partir d'un réseau radio public visité (40) étant transférés via le réseau radio d'origine (20) d'un abonné de téléphone mobile appelant (10) en itinérance, le réseau radio public visité (40) et le réseau radio d'origine (20) comprenant chacun un réseau central (24, 44) qui comprennent un centre de commutation mobile (30, 48) ainsi que chacun un premier serveur proxy (32, 50) et un deuxième serveur proxy (34, 52), le terminal mobile (60) étant simultanément enregistré dans un domaine à commutation de circuits du réseau radio mobile visité (40) et dans un domaine IMS, et un dispositif destiné à la commutation en domaines (82) étant prévu dans le terminal mobile (60) pour directement transférer des appels IMS initiés par des abonnés à l'intérieur du réseau radio public visité (40) en contournant le réseau radio d'origine (20), **caractérisé en ce que** le dispositif destiné à la commutation en domaines (82) du terminal mobile (60) est configuré pour établir une connexion de l'appel IMS via le domaine de circuits du réseau radio mobile visité (40) au lieu du domaine IMS.

2. Dispositif (80) destiné à la commutation en domaines et/ou au transfert d'appels IMS initiés par des abonnés par moyen d'un terminal mobile (60) dans un réseau radio mobile public (20, 40) selon la revendication 1, **caractérisé en ce que** des moyens (84) d'identification de l'adresse et/ou du numéro d'appel de destination du serveur appelé (54) sont prévus.

3. Dispositif (80) destiné à la commutation en domaines et/ou au transfert d'appels IMS initiés par des abonnés par moyen d'un terminal mobile (60) dans un réseau radio mobile public (20, 40) selon la revendication 2, **caractérisé par** des moyens de filtration (86) qui filtrent des appels IMS à des adresses et/ou des numéros d'appel de destination particulière pour les commuter en domaines ou pour les transférer directement.

4. Dispositif (80) destiné à la commutation en domaines et/ou au transfert d'appels IMS initiés par des abonnés par moyen d'un terminal mobile (60) dans un réseau radio mobile public (20, 40) selon l'une des revendications 1 à 3, **caractérisé par** des moyens (88) destinés au transfert direct dans un domaine à commutation par parquets.

5. Dispositif (80) destiné à la commutation en domaines et/ou au transfert d'appels IMS initiés par des abonnés par moyen d'un terminal mobile (60) dans un réseau radio mobile public (20, 40) selon l'une des revendications 1 à 4, **caractérisé par** des moyens (90) destinés à la commutation en domaines et au transfert direct dans un domaine à commutation de circuits au sein d'un réseau radio visité (40).

6. Procédé destiné à la commutation en domaines et/ou au transfert d'appels IMS initiés par des abonnés par moyen d'un terminal mobile (60) dans un réseau radio mobile public (20, 40), les appels IMS à partir d'un réseau radio public visité (40) étant transférés via le réseau radio d'origine (20) d'un abonné de téléphone mobile appelant (10) en itinérance, le terminal mobile (60) étant simultanément enregistré dans un domaine à commutation de circuits du réseau radio mobile visité (40) et dans un domaine IMS, et des appels IMS à transférer parmi des appels IMS initiés par des abonnés à l'intérieur du réseau radio public visité (40) étant commutés dans un domaine à commutation de circuits et étant directement transférés en contournant le réseau radio d'origine (20), **caractérisé en ce qu'** une connexion de l'appel IMS est établie par moyen du dispositif destiné à la commutation en domaines (82) du terminal mobile (60) via le domaine à commutation de circuits du réseau radio mobile visité (40) au lieu du domaine IMS.

7. Procédé destiné à la commutation en domaines et/ou au transfert d'appels initiés par des abonnés par moyen d'un terminal mobile (60) dans un réseau radio mobile public (20, 40) selon la revendication 6, **caractérisé en ce que** l'adresse et/ou le numéro d'appel du serveur appelé (54) est identifié.

8. Procédé destiné à la commutation en domaines et/ou au transfert d'appels initiés par des abonnés par moyen d'un terminal mobile (60) dans un réseau radio mobile public (20, 40) selon la revendication 7, **caractérisé en ce que** des appels IMS à des adresses et/ou des numéros d'appel de destination particulière sont filtrés pour les commuter en domaines ou pour les transférer directement.

9. Procédé destiné à la commutation en domaines et/ou au transfert d'appels IMS initiés par des abonnés par moyen d'un terminal mobile (60) dans un réseau radio mobile public (20, 40) selon l'une des revendications 6 à 8, **caractérisé en ce qu'**un appel IMS est directement transféré au sein d'un domaine à commutation par parquets.

10. Procédé destiné à la commutation en domaines et/ou au transfert d'appels IMS initiés par des abonnés par moyen d'un terminal mobile (60) dans un réseau radio mobile public (20, 40) selon l'une des revendications 6 à 9, **caractérisé en ce qu'**un appel IMS est commuté dans un domaine à commutation de circuits et est directement transféré au sein du réseau radio visité (40).
